Europäisches Patentamt

European Patent Office — Publication number: **0 045 549**

Office européen des brevets — **A1**

(19)
(11)

# EUROPEAN PATENT APPLICATION

(12)

(21) Application number: **81200847.2**

(22) Date of filing: **24.07.81**

(51) Int. Cl.³: **G 06 K 9/46**

(30) Priority: **01.08.80 NL 8004426**

(43) Date of publication of application:
**10.02.82 Bulletin 82/6**

(84) Designated Contracting States:
**BE CH DE FR GB LI SE**

(71) Applicant: **Staat der Nederlanden (Staatsbedrijf der Posterijen, Telegrafie en Telefonie)**
**P.O. Box 430**
**NL-2260 AK Leidschendam(NL)**

(72) Inventor: **Wilcke, Robert**
**21 Drontermeerlaan**
**NL-2317 GH Leiden(NL)**

(54) **Apparatus for the recognition of characters.**

(57) The invention relates to an apparatus for the recognition of characters, preferably of hand-written figures on documents, comprising a store for information obtained from a learning set and a processor for controlling the apparatus. The invention is characterized by a circuit (5, 6) for scanning and geometrically separating a portion of the binary store (4) containing the information of one character, a circuit (7) for establishing quasi-topological code tables in four viewing directions, a circuit (8) for transforming said code tables into four layer structure codes, and a circuit (10) in which probability tables are utilized for determining, by means of a circuit (11), the most probable class of the signal to be recognized. The apparatus is based on the idea of utilizing only one type of feature describing the entire basic structure, whereas each of the features utilized in the known technique only describes one portion of the structure.

**FIG. 11**

EP 0 045 549 A1

- 1 -

Apparatus for the recognition of characters.

The invention relates to an apparatus for the recognition of characters, preferably of hand-written figures on documents, comprising a camera, a threshold circuit, a device for discretizing the signal delivered by the threshold circuit, a binary store, a store for information obtained from a learning set and a processor for controlling the apparatus.

Such an apparatus is known, e.g. from the British Patent Specification 1 472 443. In the known apparatus, a large number of properties are derived from the data of the characters to be recognized, so that the equipment required is very comprehensive.

A further increase in the number of properties is quite possible, but the recognition result can hardly be improved by it. This is due to the fact that each of the structural features utilized in the known technique describes only one portion of the structure.

It is not simple, and in many cases unfeasible, to recover a character – which may be stylized – from the information contained in the features. A further disadvantage of the known technique is that some structural aspects are detected more than once by means of the various features. Consequently, on the one hand there is a shortage of information, which sets a limit to the recognizability, whereas, on the other hand, there is a surplus of information, which leads to expensive apparatus.

It is the object of the invention to provide an apparatus based on an entirely different principle, such that the recognizing result

- 2 -

equals or even surpasses that of the known technique, whereas relatively little equipment is required.

The apparatus according to the invention is based on the idea of utilizing only one type of feature, which is derived in four viewing directions. This feature describes the entire basic structure seen in said viewing direction, which basic structure can be thought of as constituted by a set of layers which are found successively.

Said object can be attained by so arranging the apparatus that it is characterized by a device for scanning and geometrically separating a portion of the binary store containing the information of one character, a circuit for establishing quasi-topologic code tables in four viewing directions, a circuit for transforming these code tables into four layer structure codes, and a circuit in which probability tables are utilized for determining, by means of a circuit, the most probable class of the signal to be recognized.

The invention will now be explained in detail, reference being had to the drawings, in which

Fig.  1 shows an example of the first cycle in a layer structure;

Fig.  2 ditto of the second cycle;

Fig.  3 ditto of the third cycle;

Fig.  4 the compression of a character;

Fig.  5 two similar characters with different locations of the terminal points;

Fig.  6 the coding of a layer structure;

Fig.  7 the coding according to Nadler;

Fig.  8 the coding according to the invention;

Fig.  9 ditto;

Fig. 10 the conversion of a code table into a rearranged table suitable for determining the layer structure code, and

Fig. 11 a block diagram.

The basic structure of a character pattern as seen in a given viewing direction - from left to right in what follows - is thought of as constituted by a set of layers.

In establishing each fresh layer, only those "branches" are taken into account which are entirely visible in the given viewing direction , i.e. which are not entirely or partly hidden behind other branches.

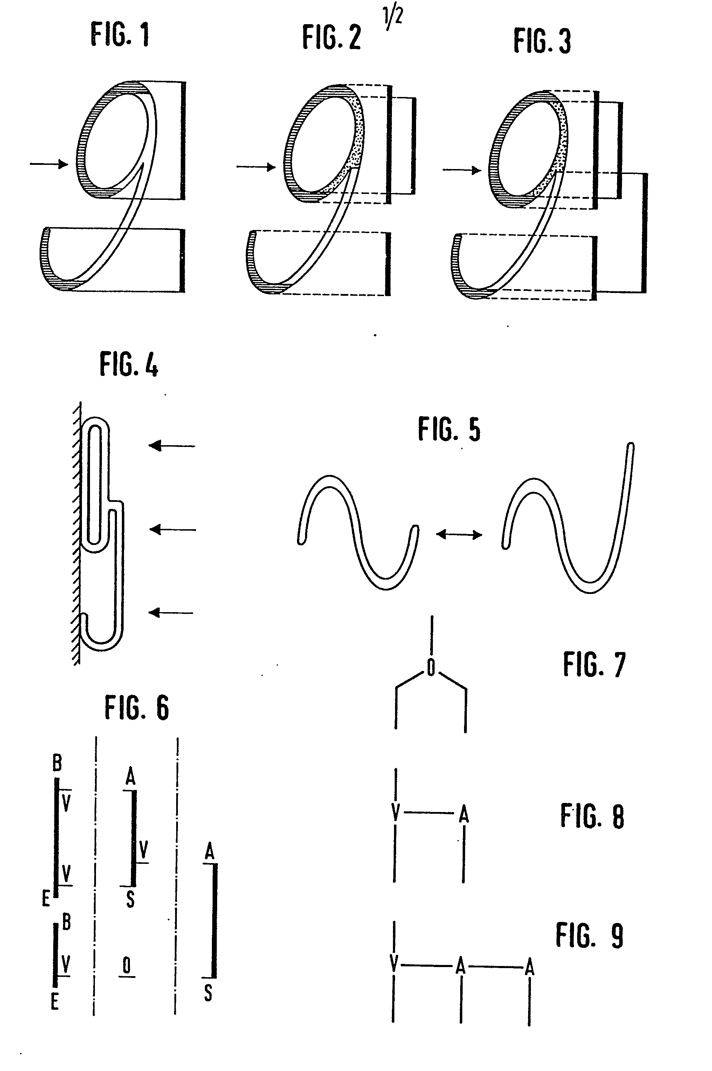

In the example according to Fig. 1, in the first cycle, only two complete branches of the character pattern are visible. The arrow indicates the viewing direction.

In the second cycle, the character pattern is looked at, as it were, across the first layer and thus other branches are found which are entirely visible. In this manner the second layer is established, which, moreover, joins the first layer in a special way (Fig. 2).

Finally, in the third cycle, the last layer in this example is found; this layer, too, joins the layers previously established in a special way (Fig. 3).

In the process described above, the basic structure which a character pattern exhibits when viewed in a given direction, is represented in a special manner by the layer structure, which constitutes a stylized image of the character pattern. This stylized image seems to be obtained, as it were, by compressing the character pattern against a vertical wall placed at the left of it, the requirement having been set that no branches shall be pressed together (Fig. 4).

Coding the layer structure described hereinbefore, also layer by layer, leads to a structure which is invariable to non-essential variation in the location of initial and terminal points of the branches. This is a great advantage as compared with known quasi-topologic codes for a character recognition system, described e.g. by M. Nadler in "Sequentially-local picture operators", 2nd Int. Joint Conf. on Pattern Recognition 1974, Copenhagen, pp. 131 - 135 and in "Structural codes for omnifont and hand-written characters", 3rd Int. Joint Conf. on Pattern Recognition 1976, California, pp. 135 - 139. In the latter article, the variability of the locations of initial and terminal points of quasi-topologic codes is called a disadvantage. Thus the above-mentioned technique implying a quasi-topologic code is sensitive to the variation illustrated by Fig. 5.

On the other hand, the layer structure and the appurtenant structure code according to the invention are invariable in the presence of such a variation.

In layer-by-layer coding, a layer is so coded that the layer structure can be unambiguously recovered. For example, for the "nine" described earlier (Fig. 6):

B = normal beginning of a branch;

A = beginning of a diverging branch, which, consequently, joins - at the top - a preceding layer;

E = normal end of a branch;

S = end of a converging branch, which, consequently, joins - at the bottom - a preceding layer;

V = branch point, i.e. the point where a branch joins a next layer;

0 = filling point indicating that a branch passes beyond the adjacent layer.

Coding in layers is e.g. generating the following code by evaluating the layer from top to bottom:

layer 1 : B V V E B V E

layer 2 : A V S 0

layer 3 : A S

Using a separation mark, e.g. $\phi$, the whole layer structure can be coded as follows:

layer structure, left-hand aspect: B V V E B V E $\phi$ A V S 0 $\phi$ A S.

By coding these symbols e.g. in three bits, a code is obtained which represents the entire layer structure. It appears that 72 bits amply suffice for coding all hand-written figures.

That the code provides a marked data reduction has also been demonstrated by counting how many different layer structure codes, determined in four viewing directions, occur in a set of 40,000 hand-written figures taken from the giro process. It appears that 200 codes per viewing direction suffice to classify over 99% of the figures.

The layer structure code can be supplemented with a table stating all branch lengths of the stylized character patterns. These branch lengths enhance the adequacy of the description of the layer structure, because the stylized character pattern is known then, as it were, in its correct proportions. Said branch lengths are not utilized in the recognition method that will be described hereinafter. The layer structure code for a given viewing direction can be generated in several different ways, as determined by the manner in which the black-and-white character pattern has been recorded. If e.g. the contour functions have been established by means of a flying-spot scanner (cf. J.R. Ullmann, Pattern Recognition Techniques, London, Butterworths, p.45), the layer structure code can be deduced from it.When a contour is scanned, the parameter representation x (t), y (t) is found, given a specified co-ordinate system. If the y-axis is chosen as vertical, the layer structure code associated with e.g. the left-hand aspect can be generated by noting the maxima and minima in the function y (t). This can easily be seen from Fig. 3. In that case, however, use was made of a black-and-white character pattern established by the technique described in the preamble, followed by a geometrical separation (by means of the device described in the British patent specification 1 442 273), the initial information being recorded in a 1024 position binary store corresponding to a character pattern consisting of 32x32 elements that can be either black or white. Such a discrete storage of the information lends itself perfectly for determining the layer structure code in four directions (horizontally, vertically, at 45° and at 135°). Therefore, the recognition system to be described hereinafter is based on these four layer structure codes. In this case, it would be possible to determine the layer structure code directly from the binary store by analysing the store in four aspects, in the manner as illustrated by Figs. 1-3, so by establishing layer by layer and finally coding the set of complete branches obtained in the manner described. The invention, however, is based on the quasi-topological codes already mentioned. These codes have, inter alia, the advantage that they can be derived simultaneously in <u>four</u> directions by one scanning of the binary image, as described by Nadler in the second article mentioned hereinbefore. The quasi-topological codes must be adapted or corrected and have been given a somewhat different interpretation in view of the subsequent determination of the layer structure code. Thus the symbol O (of opening) (Fig. 7) has been replaced by V A, branching to a splitting (Fig. 8). The effect is the same, i.e. 1 branch coming in and 2 branches going out. The code V A, however, is oriented towards the left-hand aspect and, as opposed to the code O, is also suited to describe multiple branchings (Fig.9).

Finally, the code C (= close) has been replaced by V S, branching to a confluence, the start code is called B, the stop code E and the simple passage of a branch D.

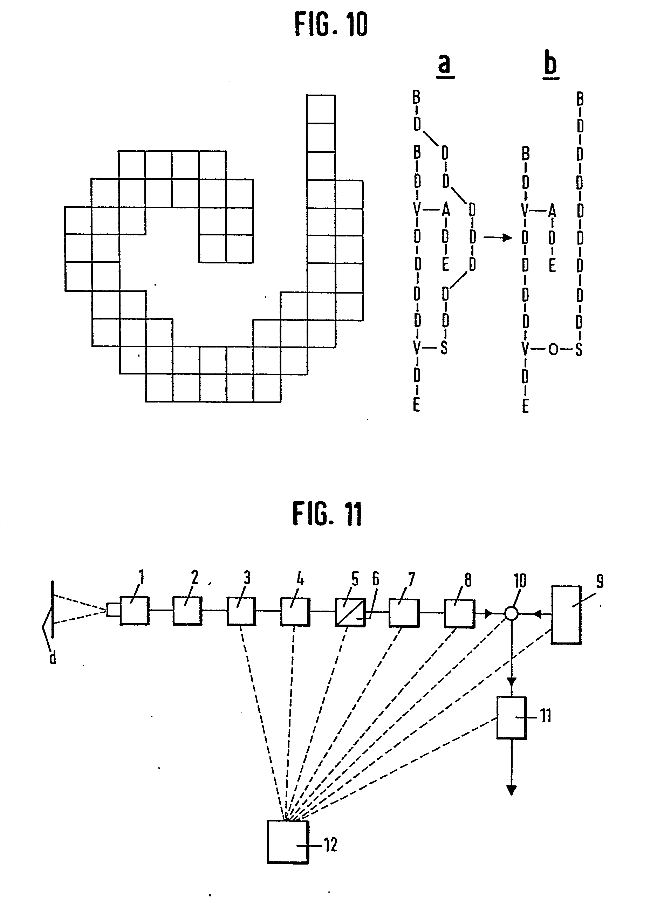

It will now be described, with the help of Fig. 10, how the quasi-topological code table (a) can be transformed into the layer structure code (b).

By examining the quasi-topological code table (a) from top to bottom and from left to right, complete branches can - as it were - every time be drawn to the left out of the table, which results in the rearranged table corresponding to the layer structure to be found. Thus, the layer structure code b for the left-hand aspect in the example of Fig. 10 will be: B V V E ∅ A E O ∅ B S.

The rearranging process specified above sometimes gives rise to a so-called filling point, as can be seen in the example of Fig. 10. In the rearranged table such a filling point is designated by an extra code symbol O.

By examining the quasi-topological code table a from top to bottom and from left to right, the layer structure code can immediately be generated, without the necessity of drawing up the rearranged table first. It has to be noted then, using a number of counters, how many codes have already been derived on each line from the table. A bifurcation (A) or a confluence (S) that cannot be derived from the table in a given cycle, generates a filling point (cf. S in Fig. 10). The transformation described here is realized, in the present case, by means of a specially-programmed microprocessor, which does this work in approximately 200 μs. Specially-built hardware circuits comprising counters, shift registers and the like can hardly do this quicker, because in that case, too, the operation must be more or less sequential. Consequently, a microprocessor is particularly suited for this purpose.

A complete recognition system based on the layer structure codes corresponding to four viewing directions can be of a simple design. Fig. 11 gives a block diagram of such a system. A device for reading the information from a document $d$, e.g. a camera 1, passes the character pattern information via a threshold circuit 2 to a discretizing circuit 3,which,in its turn, shifts the information to a binary store 4. The technique described so far does not differ from the method according to, e.g., the British patent specification 1 472 443.

A combined circuit 5, 6 serves for selecting one single rectangle and for geometrically separating the character patterns; the technique has been described e.g. in the British patent specification 1 442 273.

A circuit 7 generates, in one scanning of the store in circuit 5, 6, the quasi-topological codes for four viewing directions at a time.

A circuit 8, provided with a specially-programmed microprocessor, transforms the four quasi-topological code tables into four layer structure codes and, moreover, signals the completion of the operation, so that central processor 12 can note it and distribute new tasks.

A store 9 contains data about the nature and the frequency of the layer structure codes occurring in a learning set. By using tables mentioning how often the layer structure codes for the four viewing directions and combinations thereof occur in the learning set for each class, it is determined, with the aid of comparator 10, which class is the most probable.

For determining the class, use can be made of hardware circuits as described in the said British patent specification 1 472 443. Central processor 12 can also be arranged for this purpose. Finally, when the probabilities have been read or calculated, the statistical classification takes place in circuit 11. This circuit chooses the class with the highest chance of occurrence.

- 8 -

Claims:

1. Apparatus for the recognition of characters, preferably of hand-written figures on documents, comprising a camera, a threshold circuit, a device for discretizing the signal delivered by the threshold circuit, a binary store, a store for information obtained from a learning set and a processor for controlling the apparatus, characterized by a circuit (5, 6) for scanning and geometrically separating a portion of the binary store (4) containing the information of one character, a circuit (7) for establishing quasi-topological code tables in four viewing directions, a circuit (8) for transforming said code tables into four layer structure codes, and a circuit (10) in which probability tables are utilized for determining , by means of a circuit (11), the most probable class of the signal to be recognized.

2. Apparatus in accordance with claim 1, characterized in that, when the quasi-topological code tables are transformed into layer structure codes, a passage to another column is only coded at a bifurcation or at a confluence of branches, whereas parts of one and the same complete branch in different columns are shifted to one and the same column.

3. Apparatus in accordance with claim 2, characterized in that in the layer structure codes only beginning and end, bifurcations and confluences of branches, if any, and filling points in the connections of the branches are coded.

FIG. 1    FIG. 2   ½    FIG. 3

FIG. 4

FIG. 5

FIG. 6

FIG. 7

FIG. 8

FIG. 9

# FIG. 10

# FIG. 11

| European Patent Office | EUROPEAN SEARCH REPORT | Application number EP 81 20 0847 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int Cl.³) |
|---|---|---|---|
| DA | GB - A - 1 472 443 (SPANJERSBERG) <br><br> -- | 1 | G 06 K 9/46 |
| DA | PROCEEDINGS OF THE INTERNATIONAL JOINT CONFERENCE ON PATTERN RECOGNITION, Corronado, 8-11 November 1976, Proc. 3, IEEE <br> Long Beach, US <br> NADLER: "Structural codes for omnifont and handwritten characters", pages 135-139. <br><br> -- | 1 | |
| A | IEEE TRANSACTIONS ON COMPUTERS, vol. C-21, no. 7, July 1972, New York, US <br> TOU et al. "Recognition of handwritten characters by topological feature extraction and multilevel categorization", pages 776-785 <br><br> -- | 1 | TECHNICAL FIELDS SEARCHED (Int. Cl.³) <br><br> G 06 K 9/00 <br> 9/36 <br> 9/46 <br> 9/54 <br> 9/60 <br> 9/80 |
| A | PROCEEDINGS OF THE SECOND INTERNATIONAL JOINT CONFERENCE ON PATTERN RECOGNITION, Copenhagen, 13-15 August 1974 Proc. 2, IEEE <br> Washington, US <br> SPANJERSBERG: "Combinations of different systems for the recognition of handwritten digits", pages 208-209. <br><br> -- | 1 | |
| DA | GB - A - 1 442 273 (SPANJERSBERG) <br><br> ----- | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | The present search report has been drawn up for all claims | |
|---|---|---|
| Place of search <br> The Hague | Date of completion of the search <br> 06-11-1981 | Examiner <br> FORLEN |

EPO Form 1503.1  06.78